Europäisches Patentamt

European Patent Office

Office européen des brevets

(19)

(11) Veröffentlichungsnummer: **0 167 646**
**B1**

(12) **EUROPÄISCHE PATENTSCHRIFT**

(45) Veröffentlichungstag der Patentschrift:
**28.01.87**

(51) Int. Cl.⁴: **B 03 B 11/00**

(21) Anmeldenummer: **84108045.0**

(22) Anmeldetag: **10.07.84**

(54) **Restbeton-Aufbereitungsanlage.**

(43) Veröffentlichungstag der Anmeldung:
**15.01.86 Patentblatt 86/3**

(45) Bekanntmachung des Hinweises auf die Patenterteilung:
**28.01.87 Patentblatt 87/5**

(84) Benannte Vertragsstaaten:
**AT BE CH DE FR GB IT LI LU NL SE**

(56) Entgegenhaltungen:
DE - A - 2 418 430
DE - A - 2 651 937
DE - A - 2 923 672
DE - A - 3 034 451
FR - A - 2 111 232
FR - A - 2 440 576
US - A - 2 732 138
US - A - 3 278 022
US - A - 3 338 472
US - A - 4 062 497
US - A - 4 210 290

(73) Patentinhaber: **Stetter GmbH, Neue Welt 2,
D-8940 Memmingen (DE)**

(72) Erfinder: **Riker, Rudolf, Potsdamer Strasse 16,
D-8940 Memmingen (DE)**

(74) Vertreter: **Hübner, Hans-Jürgen, Dipl.-Ing.,
Mozartstrasse 21, D-8960 Kempten (DE)**

ACTORUM AG

## Beschreibung

Die Erfindung betrifft eine Restbeton-Aufbereitungsanlage, mit einem Aufnahmebehälter, der gegenüberliegende Stirnwände, zwei Seitenwände, einen Boden sowie einen oberen Abdeckrost aufweist, mit einer Wascheinrichtung zum Trennen des Restbetons in mehrere Komponenten, wie Sand und Kies einerseits und Feinstbestandteile andererseits, die letztere zusammen mit Spülwasser an einem Ende der Wascheinrichtung ausgespült werden, während die erste Komponente am gegenüberliegenden Ende der Wascheinrichtung ausgetragen wird, mit einem an dem geneigt ausgebildeten Boden des Aufnahmebehälters anschliessenden ebenfalls geneigten Verbindungskanal, der den Aufnahmebehälter mit der Wascheinrichtung verbindet und mit einer Auslasseinrichtung für den Aufnahmebehälter, die die aus dem Aufnahmebehälter abgegebene Restbetonmenge in Abhängigkeit von der Aufnahmefähigkeit der Wascheinrichtung regelt.

Eine solche Restbeton-Aufbereitungsanlage ist aus der DE-A-30 34 451 bekannt. Die Auslasseinrichtung besteht aus einer pendelnden Klappe, die mittels eines Stellenmotores in Abhängigkeit von der Antriebsleistung der Wascheinrichtung derart betätigt werden soll, dass die Klappe bei zunehmender Antriebsleistung der Wascheinrichtung schliesst und bei abnehmender Antriebsleistung wieder öffnet. Der Aufnahmebehälter hat ein Fassungsvermögen von etwa 1 m³ Inhalt. Ein Fahrzeug, das 5 m³ Rückbeton zu entladen hat, kann nur in Einzelchargen entleeren entsprechend der Leistungsfähigkeit der Wascheinrichtung, die z.B. 5 m³/h verarbeiten kann. In diesem Fall entsteht für das Fahrzeug eine Wartezeit von 1 Stunde. Die in der DE-A-30 34 451 angesprochene Regelung der Auslassklappe in Abhängigkeit vom Leistungsbedarf der Wascheinrichtung ist noch nicht optimal. Bei vollem Aufnahmebehälter gelangt nach Öffnen der Verschlussklappe momentan eine grosse Menge Restbeton in die Wascheinrichtung. Die Leistungsaufnahme für den Drehantrieb der Waschtrommel steigt aber erst massgeblich an, wenn die Fein- und Grobbestandteile von den Schöpfbechern angehoben werden. Erst dann kann die Klappe schliessen. Bis dahin ist aber eine zu grosse Menge an Restbeton in die Waschtrommel gelangt, als für einen optimalen Trennschnitt in der Grösse von etwa 0,2 mm zulässig wäre.

Aufgabe der Erfindung ist es, die bekannte Anlage dahingehend zu verbessern, dass auch grössere Rest- und Rückbetonmengen in der Grössenordnung von 5 m³ kurzfristig in den Aufnahmebehälter entleert werden können und dass eine vollautomatische Verarbeitung der eingeschütteten Betonmenge mit einer genaueren Regelung derart erfolgt, dass die Wascheinrichtung nicht überladen wird und ein niedriger Trennschnitt gewährleistet werden kann.

Diese Aufgabe wird erfindungsgemäss dadurch gelöst, dass der Aufnahmebehälter aus einem länglichen Trog besteht, dessen Länge mindestens doppelt so gross ist wie seine Breite und dessen Boden zylinderschalenförmig ausgebildet ist und dass im Trog eine Förderschnecke angeordnet ist, die wenigstens zum Teil die Auslasseinrichtung bildet, die in den Stirnwänden des Troges drehbar gelagert und ausserhalb des Troges mit einem Antriebsmotor antriebsmässig verbunden ist, wobei die Drehachse der Förderschnecke mit der geometrischen Achse des zylinderschalenförmigen Bodens mindestens angenähert zusammenfällt und dass die Drehzahl des Antriebsmotors der Förderschnecke in Abhängigkeit von der momentanen Stromaufnahme eines Antriebsmotors einer förderseitig nachgeschalteten Arbeitseinrichtung beeinflussbar ist.

Schneckenförderer sind an sich bekannt, auch auf dem Gebiet der Betonherstellung und -verarbeitung, insbesondere als sogenannte Entwässerungsschnecken, jedoch ist es auch bei diesen nicht möglich grössere Betonmengen kurzfristig zuzugeben.

Der wesentliche Vorteil der Erfindung besteht darin, dass die Förderschnecke in ihrer Drehzahl der Verarbeitungskapazität der Wascheinrichtung angepasst werden kann, sodass unabhängig vom Füllzustand des Aufnahmebehälters etwa die Restbetonmenge in die Wascheinrichtung eindosiert wird, die diese pro Zeiteinheit verarbeiten kann. Vorzugsweise wird die Ausflussmenge aus dem Aufnahmebehälter geringfügig grösser eingestellt. Übersteigt die Stromaufnahme des Waschtrommelantriebes dann einen eingestellten Wert, wird die Drehzahl der Förderschnecke automatisch reduziert, mit der Folge, dass die Stromaufnahme der Waschtrommel diesen oder einen benachbarten Einstellwert wieder unterschreitet. Entsprechend wird die Ausflussmenge durch Drehzahlerhöhung der Förderschnecke wieder erhöht. Die Regelung ist somit sehr genau. Eine Überfüllung der Waschtrommel ist ausgeschlossen. Diese arbeitet unter optimalen Bedingungen und es wird daher ein sehr niedriger Trennschnitt eingehalten.

Die erfindungsgemässe Förderschnecke ermöglicht die Ausbildung eines Aufnahmebehälters mit sehr grosser Länge, die das Dreifache und mehr der Breite betragen kann. Vorzugsweise beträgt die Länge etwa 5 m und die Breite etwa 1,5 m, womit sich ein Aufnahmevolumen von etwa 6 m³ realisieren lässt. Der grosse Pufferbehälter gestattet den Einsatz einer kleineren Grösse der Waschtrommel, da die damit verbundene Erhöhung der Laufdauer sich nicht nachteilig auswirkt, da die Anlage vollautomatisch arbeitet und selbsttätig abschaltet.

Gemäss einer besonders einfachen Ausführungsform der Erfindung erfolgt die Regelung derart, dass der Antriebsmotor der Förderschnecke bei Überschreiten eines vorgewählten Wertes des elektrischen Stromes im Stromkreis des Antriebsmotors der Arbeitseinrichtung abgeschaltet und bei Unterschreiten eines vorgewählten Wertes wieder eingeschaltet wird. Eine alternative Regelung besteht darin, dass die Drehzahl des Antriebsmotors der Förderschnecke stufenlos regelbar ist und eine Drehzahlregelung in Abhängigkeit von der Stromaufnahme des Antriebsmotors der Arbeitseinrichtung derart erfolgt, dass bei Verringerung der Stromaufnahme des Antriebsmotors der Arbeitseinrichtung eine Drehzahlerhöhung des Antriebsmotors der Förderschnecke erfolgt und umgekehrt.

Die Arbeitseinrichtung ist vorzugsweise die Wascheinrichtung, kann aber auch gemäss einer Ausgestaltung der Erfindung eine dieser förderseitig nachgeschaltete Hochfördereinrichtung sein.

Obwohl die Förderschnecke das alleinige Dosierorgan bilden kann, so besteht eine vorteilhafte Ausgestaltung noch darin, dass zusätzlich die an sich bekannte Absperrklappe verwendet wird. Diese besteht gemäss einer einfachen Ausbildung durchgehend aus elastisch verformbarem Material und schliesst somit selbsttätig, wenn die Förderschnecke stillsteht und öffnet entsprechend, wenn die Förderschnecke arbeitet. Alternativ besteht ein Merkmal der Erfindung darin, den Antrieb des Absperrorgans gleichzeitig mit der Drehzahländerung der Förderschnecke zu betätigen.

Der Aufnahmebehälter hat eine unterhalb des Deckrostes die an sich bekannte Spülwasser-Reinigungseinrichtung. Erfindungsgemäss wird diese nun ebenfalls bei Unterschreiten eines eingestellten Wertes der Stromaufnahme des Antriebsmotors der Arbeitseinrichtung aktiviert. Die Abschaltung der vorzugsweise intervallartig arbeitenden Spülwasser-Reinigungseinrichtung erfolgt über eine Zeitsteuerung oder auch in Abhängigkeit von der Antriebsleistung der Waschtrommel im Bereich deren Leerlaufleistung.

Eine Weiterbildung besteht noch darin, dass der Verbindungskanal eine eigene Spülwasser-Reinigungseinrichtung aufweist, die entsprechend der Reinigungseinrichtung des Aufnahmebehälters geregelt wird.

Ein weiteres wichtiges Merkmal besteht noch darin, dass das in der Wascheinrichtung vorgesehene Wasserzufuhrsystem in Abhängigkeit von der Aktivierung der Spülwasser-Reinigungseinrichtung des Aufnahmebehälters geregelt wird und zwar derart, dass die Wasserzufuhr aus dem Wasserzufuhrsystem der Wascheinrichtung gedrosselt oder ganz abgeschaltet wird, wenn der Aufnahmebehälter gespült wird.

Nach der DE-A-30 34 451 muss bei grösseren Aufnahmebehältern von einer Schwingmetallaufhängung mit Vibrationsantrieb abgesehen werden. Gemäss einem Merkmal der Erfindung ist der Verbindungskanal über ein flexibles Kanalstück mit dem Aufnahmebehälter verbunden, sodass er als Vibrationsrinne betrieben werden kann, womit eine sichere Leerförderung auch bei geringer Neigung gewährleistet ist.

Anhand der Zeichnung sei die Erfindung beispielsweise näher erläutert.

Es zeigt

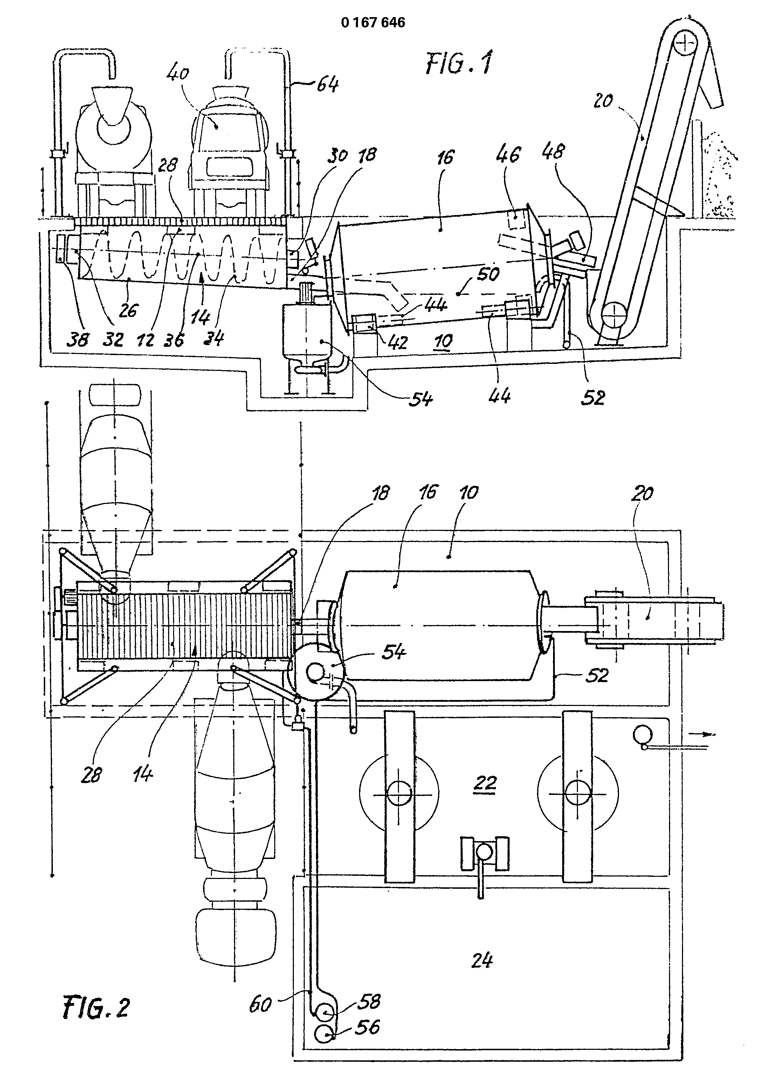

Fig. 1 eine schematische Seitenansicht einer Restbeton-Aufbereitungsanlage,

Fig. 2 eine Draufsicht auf die Anlage gemäss Fig. 1,

Fig. 3 ein Leistungsdiagramm mit den Arbeitskennlinien des Aufnahmebehälters und der Wascheinrichtung,

Fig. 4 den Anschluss des Aufnahmebehälters mit Absperrorgan und Verbindungskanal an die Wascheinrichtung in grösserem Massstab,

Fig. 5 ein Schaubild der Stromaufnahme der Antriebsmotoren der Waschtrommel mit Schaltpunktabnahme zur Regelung der Förderschnecke des Aufnahmebehälters und zur Aktivierung der Spülwasser-Reinigungseinrichtung,

Fig. 6 ein Blockschaltbild für die Regelung gemäss Fig. 5,

Fig. 7 eine Ansicht mit schematischer Darstellung der Ein-Ausregelung des Förderschneckenmotors und des Vibratormotors des Verbindungskanals,

Fig. 8 eine Darstellung ähnlich Fig. 7 mit gleichzeitiger Regelung der Auslassklappe,

Fig. 9 eine Darstellung ähnlich der Fig. 7 und 8 mit einer Regelung der Drehzahl eines Getriebemotors für die Förderschnecke und Aktivierung des Spülwassersystems für den Verbindungskanal und

Fig. 10 eine Darstellung ähnlich der Fig. 7 bis 9 mit zusätzlicher Aktivierung des Spülwassersystems für den Aufnahmebehälter.

In einer Grube 10 befinden sich ein entlang der oberen Längsrahmen 12 abgestützter Aufnahmebehälter 14, eine als zylindrische Trommel ausgebildete Wascheinrichtung 16, ein den Aufnahmebehälter mit der Wascheinrichtung 16 verbindender Verbindungskanal 18, ein der Wascheinrichtung 16 förderseitig nachgeschalteter Hochförderer 20, ein Schlammwasserbecken 22 und ein Reinwasserbecken 24. Der Aufnahmebehälter 14 besteht aus vertikalen Stirnwänden, vertikalen oder leicht nach oben und aussen geneigten Seitenwänden, einem zylinderschalenförmigen Boden 26 und einem horizontalen, von Lastkraftwagen überfahrbaren Deckrost 28. Die Stirnwände des Aufnahmebehälters haben aussenseitige Lager 30, 32, in denen eine Welle drehbar gelagert ist, die eine Förderschnecke 34 trägt. Die Achse 36 der Förderschnecke fällt mit der geometrischen Achse des zylinderschalenförmigen Bodens 26 zusammen. Ein Antriebsmotor 38 treibt die Förderschnecke 34 an. Die Achse 36 und damit der zylinderschalenförmige Boden 26 sind in Austragrichtung geneigt und am Tiefstpunkt des zylinderschalenförmigen Bodens 26 schliesst sich im Bereich der abförderseitigen Stirnwand des Aufnahmebehälters 14 der Verbindungskanal 18 an, der ebenfalls geneigt ist und durch einen Einlaufmundring der Wascheinrichtung 16 in deren Inneres hineinführt.

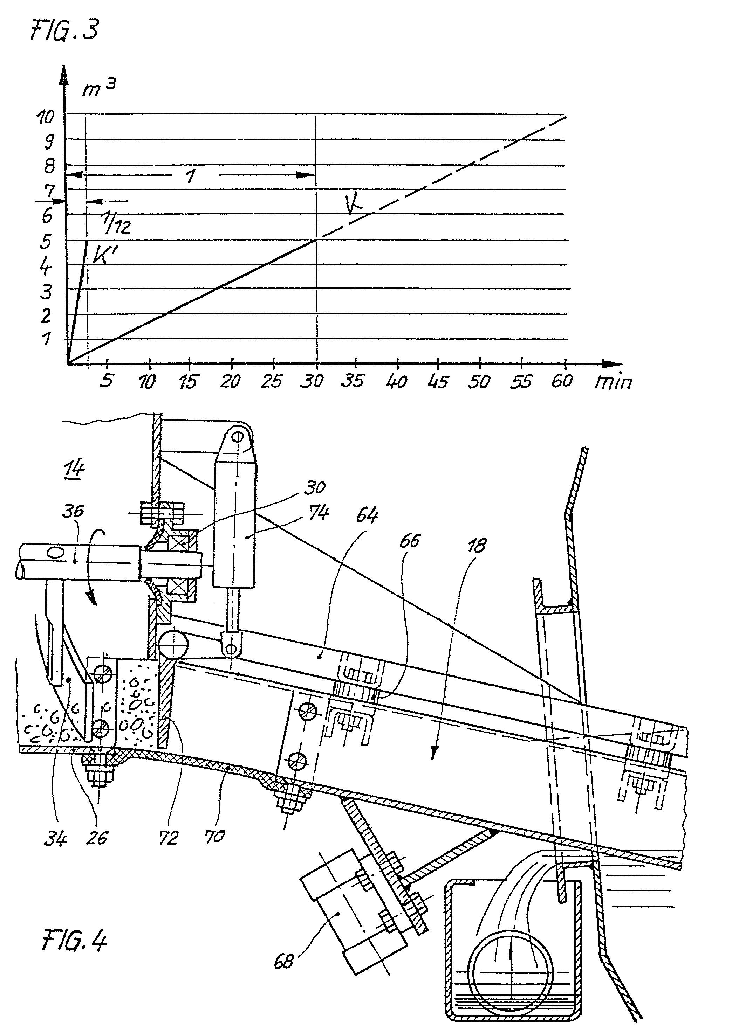

Vier LKW's 40 können gleichzeitig Rest- und Rückbeton in den Aufnahmebehälter 14 entladen. Wie Fig. 3 erläutert, kann eine Entladung von 5 m³ in 2½ Minuten erfolgen. Die Förderschnecke 34 liefert eine bestimmte Menge pro Zeiteinheit, die etwas grösser als die Verarbeitungsleistung der Wascheinrichtung 16 ist. Im Ausführungsbeispiel hat die Wascheinrichtung 16 eine Leistung von 10 m³/h. Die Zuliefermenge der Förderschnecke 34 liegt etwa 10% höher. Ohne die Vorschaltung des Aufnahmebehälters müssten die LKW's 40 30 Min. an der Entladestelle stehen. Dank des Aufnahmebehälters wird dafür nur 1/12 dieser Zeit benötigt. In Fig. 3 bezeichnet K die Kennlinie der Leistung der Wascheinrichtung 16 und K' die Aufnahme-Kennlinie des Aufnahmebehälters 14.

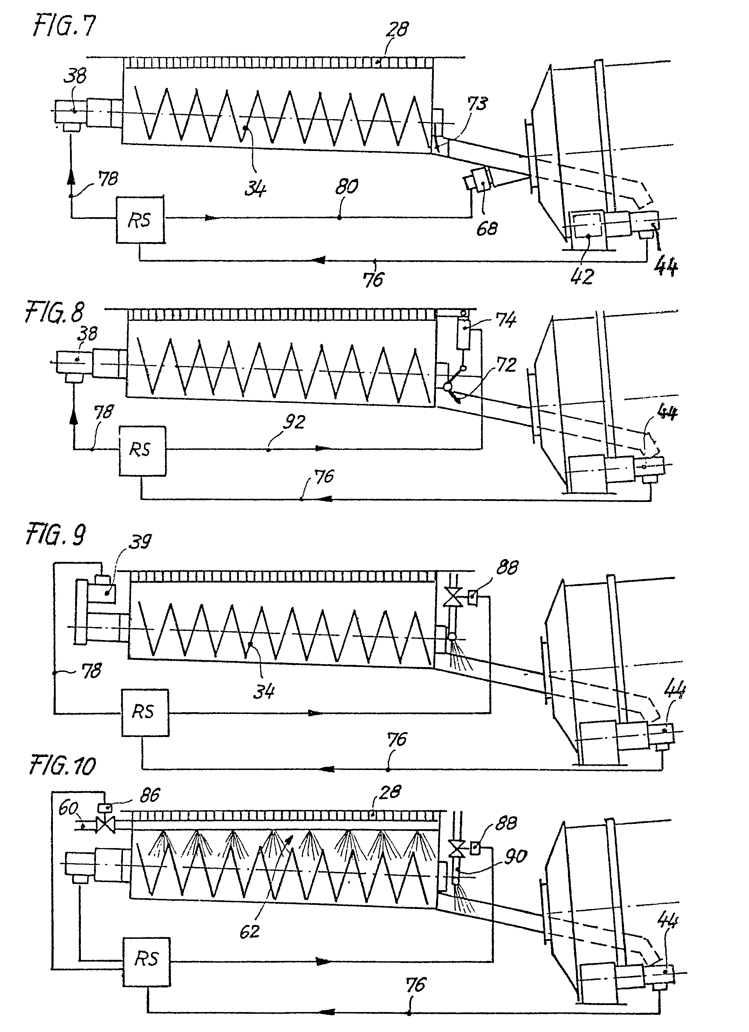

In der Wascheinrichtung 16 befindet sich eine eingebaute Förderspirale, die Sand und Kies zum rechten Ende hin fördert, wenn die trommelförmige Wascheinrichtung gedreht wird. Dazu ist sie auf vier Stützrollen 42 abgestützt, von denen die auf einer Seite liegenden Stützrollen jeweils von einem Antriebsmotor 44 (Fig. 7 bis 10) angetrieben werden. Am rechtseitigen Ende befindet sich innerhalb der trommelförmigen Wascheinrichtung 16 eine Anzahl Schöpfbecher 46, die die groben und feinen Bestandteile auf eine Vibrationsrutsche 48 transportieren, von wo das ausgetragene Gut auf den Hochförderer 20 gelangt. Die Wascheinrichtung 16 enthält eine Spülwasserfüllung, deren Niveau bei 50 dargestellt ist.

Spülwasser wird laufend durch die Leitung 52 zugeführt. Dieses Spülwasser, das mit Feinstbestandteilen angereichert ist, tritt aus der Einlassöffnung der Wascheinrichtung 16 aus, gelangt in eine Schlammwasser-Fördereinrichtung 54 und von dieser in das Schlammwasserbecken 22 und von dort über einen Überlauf in das Spülwasserbecken 24, aus dem es über die Leitung 52 in die Wascheinrichtung 16 durch die Pumpe 56 zurückgepumpt wird. Eine andere Pumpe 58 versorgt über eine Leitung 60 eine Spülwasser-Reinigungseinrichtung 62, die an beiden Längsseiten unterhalb des Rostes 28 installiert ist. Die Leitung 60 speist auch überflurmontierte Wassergalgen 64, die zur Reinigung der Fahrzeuge dienen.

Wie sich aus Fig. 4 ergibt, ist an einer gestellfesten Strebe 64 über Schwingmetalle 66 der Verbindungskanal 18 beweglich aufgehängt, der mit einem Vibrationsmotor 68 bewegt werden kann und damit eine Vibrationsrinne bildet. Der Verbindungskanal 18 ist mit einem flexiblen Kanalstück 70 an den Boden 26 und die Stirnwand des Aufnahmebehälters 14 angeschlossen. Im Auslaufbereich der Stirnwand unterhalb des Lagers 30 befindet sich eine Absperrklappe 72, die mittels eines Antriebszylinders 74 geöffnet und geschlossen werden kann.

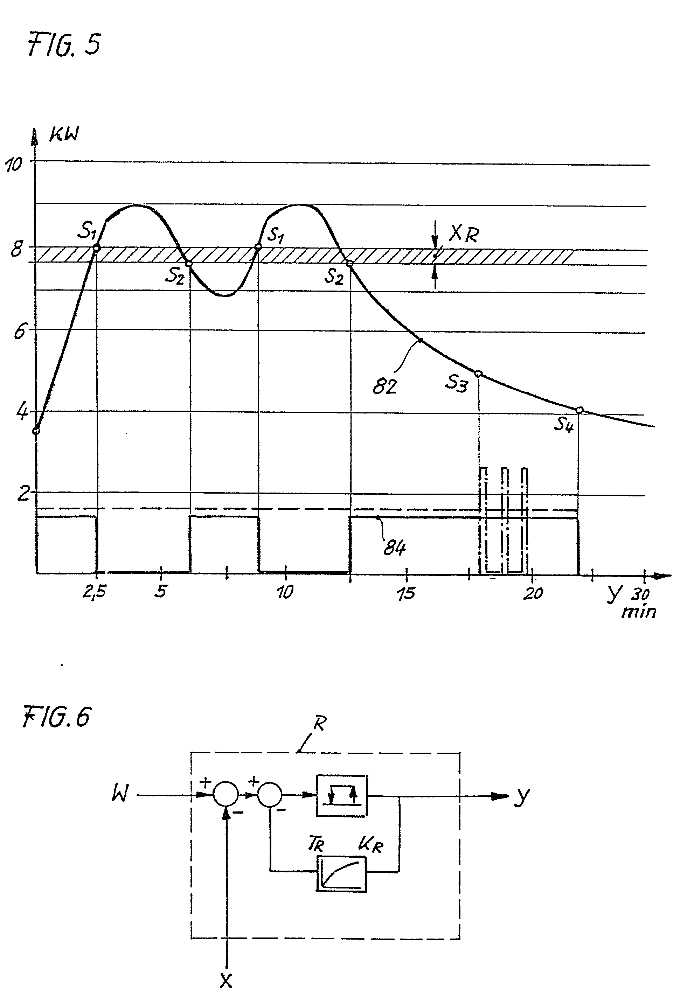

Das Reglungsprinzip wird anhand von Fig. 5 beschrieben. Mit dem Beginn des Einfüllens von Restbeton in den Aufnahmebehälter 14 wird die Anlage eingeschaltet. Die Förderschnecke 34 liefert den Beton in die Wascheinrichtung 16, die von den Motoren 44 gedreht wird. Die Antriebsleistung dieser Motoren steigt entsprechend der aufgenommenen Betonmenge von der Leerlaufleistung unterhalb 4 kW allmählich an. Die Leistung der Motoren 44 wird über eine Verbindungsleitung 76 von einem Leistungsmesser in einer Schalteinrichtung RS gemessen. Der Schaltpunkt ist auf 8 kW eingestellt. Wird dieser Wert erreicht, werden im Schaltpunkt $S_1$ (Fig. 5) über die Leitungen 78, 80 der Antriebsmotor 38 der Förderschnecke 34 und der Vibrationsmotor 68 gestoppt. Die Antriebsleistung der Motoren 44 steigt dann noch geringfügig weiter an und fällt dann wieder bis auf einen zweiten Wert, der etwas unter 8 kW eingestellt ist. Im Schaltpunkt S2 werden die Motore 38, 68 wieder eingeschaltet und dieses Schaltspiel wiederholt sich, wobei die Hysterese $X_R$ der Regelstrecke sehr schmal sein kann. Die Kennlinie 82 in Fig. 5 stellt die Leistungsaufnahme der Antriebsmotoren 44 und die Kennlinie 84 diejenige des Antriebsmotors 38 der Förderschnecke 34 dar. Gemäss Fig. 5 ist nach 12,5 Min. der Aufnahmebehälter 14 entleert. Die Antriebsleistung der Motoren 44 sinkt weiter ab. Wird ein Leistungswert kurz oberhalb der Leerlaufleistung erreicht, werden gemäss Fig. 10 Magnetventile 86, 88 kurzzeitig geöffnet, womit die Sprüheinrichtung 62 im Aufnahmebehälter 14 und eine separate Sprüheinrichtung 90 im Bereich des Verbindungskanals 18 aktiviert werden. Über eine Zeitsteuerung werden mehrere Sprühvorgänge intervallartig wiederholt. Während der Aktivierung der Sprüheinrichtungen 62, 90 bleibt die Pumpe 56 zur Speisung der Wascheinrichtung 16 ausser Betrieb. Im Bereich der Leerlaufleistung der Antriebsmotoren 44 werden im Schaltpunkt $S_4$ die Motoren 38, 68 gemäss Fig. 7 endgültig abgeschaltet, wobei sich die dort veranschaulichte elastische Absperrklappe selbsttätig schliesst. Gemäss Fig. 8 wird gleichzeitig über eine Leitung 92 der Antrieb 74 betätigt und die Klappe 72 motorisch geschlossen. Nach einer einstellbaren Nachlaufzeit schaltet die Regeleinrichtung RS die Antriebsmotore 44 und die Pumpen 56, 58 ab. Die Anlage ist damit stillgesetzt, ohne dass es eines Eingriffes von Hand bedurft hätte.

In Fig. 9 ist anstelle des ein- und ausschaltbaren Antriebsmotors 38 ein Getriebemotor 39 veranschaulicht, der eine stufenlose Drehzahlregulierung erlaubt. Die Regeleinrichtung RS regelt über die Leitung 78 die Drehzahl der Förderschnecke 34 herab, wenn die Antriebsleistung der Motoren 44 den Schaltpunkt $S_1$ erreicht haben und erhöht diese Drehzahl wieder etwa im Schaltpunkt S2.

Anstelle der beschriebenen Regelung in Abhängigkeit von der Leistungsaufnahme der Antriebsmotoren 44 der Wascheinrichtung 16 kann auch diejenige des Antriebsmotors des Hochförderers 20 verwendet werden.

Es ist auch möglich anstelle der Vibrationsrutsche 44 und des Hochförderers 20 lediglich ein etwa 15° geneigtes Förderband anzuordnen. Die Schöpfbecher 46 geben direkt auf das Förderband ab. Die Regelung der Zuförderung in die Wascheinrichtung erfolgt dann direkt von der Antriebsleistung dieses Förderbandes aus.

Wenn in den Figuren die Wascheinrichtung als Waschtrommel dargestellt ist, so versteht sich, dass an deren Stelle im Rahmen der Erfindung jede bekannte Wascheinrichtung, also z.B. auch eine Waschschnecke oder ein Waschrohr eingesetzt werden kann.

In Fig. 6 ist ein Blockschaltbild eines Zweipunkt-Reglers mit verzögerter Rückführung dargestellt. Mit «W» ist die Führungsgrösse, mit «X» die Regelgrösse und mit «Y» die Stellgrösse gekennzeichnet. Die innere Rückführung erfolgt über ein PT1-Glied. Die Gegenkoppelung wirkt wie eine Regelstrecke, deren Übertragungsbeiwert KR und Rückführzeitkonstante TR einstellbar sind. Eine derartige Steuerung würde angewandt bei der Lösung der drehzahlveränderlichen Zuförderung nach Fig. 9. Ohne die Gegenkoppelung würde es sich um eine reine Zwei-Punkt-Schaltung entsprechend Fig. 7 handeln, wobei lediglich die Schaltpunkte S 1 und S 2, die Hysterese, einstellbar wären.

## Patentansprüche

1. Restbeton-Aufbereitungsanlage mit einem Aufgabebehälter (14), der gegenüberliegende Stirnwände, zwei Seitenwände, einen Boden (26) sowie einen oberen Abdeckrost (28) aufweist, mit einer Wascheinrichtung (16) zum Trennen des Restbetons in mehrere Komponenten, wie Sand und Kies einerseits und Feinstbestandteile andererseits, die letztere zusammen mit Spülwasser an einem Ende der Wascheinrichtung (16) ausgespült werden, während die erste Komponente am gegenüberliegenden Ende der Wascheinrichtung (16) ausgetragen wird, mit einem, an den geneigt ausgebildeten Boden (26) des Aufnahmebehälters (14) anschliessenden ebenfalls geneigten Verbindungskanal (18), der den Aufnahmebehälter (14) mit der Wascheinrichtung (16) verbindet und mit einer Auslasssteuereinrichtung (34, 72) für den Aufnahmebehälter (14), die die aus dem Aufnahmebehälter (14) abgegebene Restbetonmenge in Abhängigkeit von der Aufnahmefähigkeit der Wascheinrichtung (16) regelt, dadurch gekennzeichnet, dass der Aufnahmebehälter (14) aus einem länglichen Trog besteht, dessen Länge mindestens doppelt so gross ist wie seine Breite und dessen Boden (26) zylinderschalenförmig ausgebildet ist und dass im Trog eine Förderschnecke (34) angeordnet ist, die wenigstens zum Teil die Auslasseinrichtung (34, 72) bildet, die an den Stirnwänden des Aufnahmebehälters (14) drehbar gelagert und ausserhalb des Aufnahmebehälters (14) mit einem Antriebsmotor (38) antriebsmässig verbunden ist, wobei die Drehachse (36) der Förderschnecke (34) mit der geometrischen Achse des zylinderschalenförmigen Bodens mindestens angenähert zusammenfällt und dass die Drehzahl des Antriebsmotors (38) der Förderschnecke (34) in Abhängigkeit von der momentanen Stromaufnahme eines Antriebsmotors (44) einer förderseitig nachgeschalteten Arbeitseinrichtung (16, 20) beeinflussbar ist.

2. Restbeton-Aufbereitungsanlage nach Anspruch 1, dadurch gekennzeichnet, dass der Antriebsmotor (38) der Förderschnecke (34) bei Überschreiten eines vorgewählten Wertes des elektrischen Stromes im Stromkreis des Antriebsmotors (44) der Arbeitseinrichtung (16, 20) abgeschaltet und bei Unterschreiten eines bestimmten Wertes wieder eingeschaltet wird.

3. Restbeton-Aufbereitungsanlage nach Anspruch 1, dadurch gekennzeichnet, dass die Drehzahl des Antriebsmotors (39) der Förderschnecke (34) stufenlos regelbar ist und eine Drehzahlregelung in Abhängigkeit von der Stromaufnahme und des Antriebsmotors (44) der Arbeitseinrichtung (16, 20) derart erfolgt, dass bei Verringerung der Stromaufnahme des Antriebsmotors (44) der Arbeitseinrichtung (16, 20) eine Drehzahlerhöhung des Antriebsmotors (39) der Förderschnecke (34) erfolgt und umgekehrt.

4. Restbeton-Aufbereitungsanlage nach einem der Ansprüche 1 bis 3, bei der die Auslasssteuereinrichtung ein Absperrorgan (72) aufweist, das einen eigenen Antrieb (74) besitzt, dadurch gekennzeichnet, dass der Antrieb (74) des Absperrorgans (72) gleichzeitig mit der Drehzahländerung der Förderschnecke (34) betätigt wird.

5. Restbeton-Aufbereitungsanlage nach einem der Ansprüche 1 bis 4, dadurch gekennzeichnet, dass die Arbeitseinrichtung aus einem der Wascheinrichtung (16) förderseitig nachgeschalteten Hochförderer (20) besteht.

6. Restbeton-Aufbereitungsanlage nach einem der Ansprüche 1 bis 5, bei der der Aufnahmebehälter (14) eine Spülwasser-Reinigungseinrichtung (62) aufweist, dadurch gekennzeichnet, dass diese (62) bei Unterschreiten eines eingestellten Wertes der Stromaufnahme des Antriebsmotors (44) der Arbeitseinrichtung (16, 20) aktiviert wird.

7. Restbeton-Aufbereitungsanlage nach Anspruch 6, bei der die Wascheinrichtung ein eigenes Wasserzufuhrsystem (52) aufweist, dadurch gekennzeichnet, dass die Wasserzufuhr durch das Wasserzufuhrsystem (52) mindestens verringert wird, wenn die Spülwasser-Reinigungseinrichtung (62) des Aufnahmebehälters (14) aktiviert ist.

8. Restbeton-Aufbereitungsanlage nach einem der Ansprüche 1 bis 7, dadurch gekennzeichnet, dass dem Verbindungskanal (18) eine Spülwasser-Reinigungseinrichtung (90) zugeordnet ist, die bei Unterschreiten eines eingestellten Wertes der Stromaufnahme des Antriebsmotors (44) der Arbeitseinrichtung (16, 20) aktiviert wird.

9. Restbeton-Aufbereitungsanlage bei der Verbindungskanal (18) als Vibrationsrinne ausgebildet, schwingend gelagert und mit einem Vibrationsmotor (68) verbunden ist, dadurch gekennzeichnet, dass der Verbindungskanal (18) über ein flexibles Kanalstück (70) mit dem Aufnahmebehälter (14) verbunden ist.

10. Restbeton-Aufbereitungsanlage nach einem der Ansprüche 6 bis 9, dadurch gekennzeichnet, dass das Spülwasser während der Reinigungsphase intervallartig zugeführt wird.

## Claims

1. A plant for processing surplus concrete comprising a receiving bin (14) having mutually opposite end walls, two side walls, a bottom (26) and a top covering grate (28), also comprising a washing apparatus (16) for separating the surplus concrete into a plurality of components, such as sand and gravel, on the one hand and very fine components on the other hand, which latter together with rinsing water are discharged at one end of the washing apparatus (16) whereas the first component is discharged at the opposite end of the washing apparatus (16), also comprising a transfer duct (18), which adjoins the bottom (26) of the receiving bin (14), the bottom (26) of the receiving bin (14) and also the transfer duct (18) being inclined, the latter connecting the receiving bin (14) to the washing apparatus (16) and a discharge control apparatus (34, 72) for the receiving bin (14) for controlling the discharge of surplus concrete from the receiving bin (14) in dependence on the free processing capacity of the washing apparatus (16), characterized in that the receiving bin (14) consists of an elongate trough, the length of which is at least twice its width and the bottom (26) of which is formed in the shape of a segment of a cylindrical surface, and that a conveyor screw (34) is arranged in the trough, the conveyor screw (34) at least in part constitutes the discharge control apparatus (34, 72), is rotatably mounted in the end walls of the receiving bin (14) and outside the receiving bin (14) is operatively connected to a drive motor (38), whereby the axis (36) of rotation of the conveyor screw (34) coincides at least approximately with the geometrical axis of the bottom having the shape of a segment of a cylindrical surface, and that the speed of the drive motor (38) for the conveyor screw (34) is adapted to be controlled in dependence on the instantaneous current consumption of a drive motor (44) for an implement (16, 20) which succeeds the conveyor screw (34) in conveying direction.

2. A plant for processing surplus concrete according to claim 1, characterized in that the drive motor (38) for the conveyor screw (34) is deenergized in response to a rise of the electric current above a predetermined valve in the circuit of the drive motor (44) of the implement (16, 20) and is reenergized in response to a drop of said current below a preselected value.

3. A plant for processing surplus concrete according to claim 1, characterized in that the speed of the drive motor (39) for the conveyor screw (34) is adapted to be infinitely controlled and a speed control is operated in dependence on the current consumption of the drive motor (44) for the implement (16, 20) in such a manner, that the speed of the drive motor (39) for the conveyor screw (34) is increased in response to a decrease of the current consumption of the drive motor (44) for the implement (16, 20) and vice versa.

4. A plant for processing surplus concrete according to one of the claims 1 to 3, wherein the discharge control apparatus comprises a shutoff valve (72), which is provided with an own actuator (74), characterized in that the actuator (74) for the shutoff valve (72) is operated simultaneously with the speed change of the conveyor screw (34).

5. A plant for processing surplus concrete according to one of the claims 1 to 4, characterized in that the implement consists of an elevator (20) which succeeds the whashing apparatus (16) in conveying direction.

6. A plant for processing surplus concrete according to one of the claims 1 to 5, wherein the receiving bin (14) is provided with a rinsing water cleansing apparatus (62), characterized in that this (62) is activated when the current consumption of the drive motor (44) for the implement (16, 20) decreases below an adjusted value.

7. A plant for processing surplus concrete according to claim 6, wherein the washing apparatus is provided with an own water supply system (52), characterized in that the water supply to the water supply system (52) is at least reduced when the rinsing water cleansing apparatus (62) of the receiving bin (14) is activated.

8. A plant for processing surplus concrete according to claims 1 to 7, characterized in that a rinsing water cleansing apparatus (90) is coordinated to the transfer duct (18) and is activated when the current consumption of the drive motor (44) for the implement (16, 20) decreases below an adjusted value.

9. A plant for processing surplus concrete, wherein the transfer duct (18) consists of a vibratory chute and is mounted for a swinging motion and is connected to a vibrator (68), characterized in that the transfer duct (18) is connected to the receiving bin (14) by a flexible duct section (70).

10. A plant for processing surplus concrete according to one of the claims 6 to 9, characterized in that the rinsing water is activated in intervals during the cleansing period.

**Revendications**

1. Installation de traitement de restes de béton se composant d'un récipient d'alimentation (14) comprenant des parois frontales opposées, deux parois latérales, un fond (26), ainsi qu'une grille de recouvrement supérieure (28), d'un dispositif de lavage (16) pour la séparation du béton restant en plusieurs constituants tels que le sable et le gravier, d'une part, et les constituants les plus fins, d'autre part, ces derniers étant expulsés conjointement avec l'eau de rinçage à une extrémité du dispositif de lavage (16), tandis que les premiers constituants sont évacués à l'extrémité opposée du dispositif de lavage (16), d'un conduit de raccordement (18) incliné, relié au fond également incliné (26) du récipient collecteur (14) et raccordant ce dernier (14) au dispositif de lavage (16), ainsi que d'un dispositif de commande de décharge (34, 72) destiné au récipient collecteur (14) et réglant la quantité de béton restante fournie par le récipient collecteur (14) en fonction de l'aptitude à l'absorption du dispositif de lavage (16), caractérisée en ce que le récipient collecteur (14) est constitué d'un bac oblong dont la longueur est au moins le double aussi grand que sa largeur et dont le fond (26) est réalisé en forme de coquille cylindrique et en ce qu'on a disposé, dans le bac, une vis sans fin de transport (34) qui forme au moins en partie le dispositif de décharge (34, 72) monté à l'état rotatif sur les parois frontales du récipient collecteur (14) et relié par la voie motrice à l'extérieur du récipient collecteur (14) à un moteur de commande (38), l'axe de rotation (36) de la vis sans fin de transport (34) coïncidant au moins approximativement avec l'axe géométrique du fond en forme de coquille cylindrique, et en ce que la vitesse de rotation du moteur de commande (38) de la vis sans fin de transport (34) est influençable par la consommation de courant momentanée d'un moteur de commande (44) d'un dispositif de travail (16, 20) monté en aval côté déchargement.

2. Installation de traitement de restes de béton selon la revendication 1, caractérisée en ce que le moteur de commande (38) de la vis sans fin de transport (34) est mis hors circuit lors du dépassement d'une valeur présélectionnée du courant électrique du circuit du moteur de commande (44) du dispositif de travail (16, 20) et est remis en circuit lors de la diminution d'une valeur déterminée.

3. Installation de traitement de restes de béton selon la revendication 1, caractérisée en ce que la vitesse de rotation du moteur de commande (39) de la vis sans fin de transport (34) est réglable progressivement et en ce qu'un réglage de la vitesse de rotation en fonction de la consommation de courant et du moteur de commande (44) du dispositif de travail est réalisé en effectuant, en cas de diminution de la consommation de courant du moteur de commande (44) du dispositif de travail (16, 20), une augmentation de la vitesse de rotation du moteur de commande (39) de la vis sans fin de transport (34) et inversement.

4. Installation de traitement de restes de béton selon l'une quelconque des revendications 1 à 3, dans laquelle le dispositif de commande de décharge comprend un organe d'arrêt (72) pourvu d'une commande propre (74), caractérisée en ce que la commande (74) de l'organe d'arrêt (72) est mise en action simultanément avec la modification de la vitesse de rotation de la vis sans fin de transport (34).

5. Installation de traitement de restes de béton selon l'une quelconque des revendications 1 à 4, caractérisée en ce que le dispositif de travail se compose d'un transporteur-élévateur (20) monté en aval du dispositif de lavage (16) côté déchargement.

6. Installation de traitement de restes de béton selon l'une quelconque des revendications 1 à 5, dans laquelle le récipient collecteur (14) comprend un dispositif de nettoyage à eau de rinçage (62), caractérisée en ce que ce dispositif (62) est activé lors d'une diminution d'une valeur réglée de la consommation de courant du moteur de commande (44) du dispositif de travail (16, 20).

7. Installation de traitement de restes de béton selon la revendication 6, dans laquelle le dispositif de lavage comprend un système d'amenée d'eau propre (52), caractérisée en ce que l'apport d'eau est au moins réduit par le système d'amenée d'eau (52) lorsque le dispositif de nettoyage à eau de rinçage (62) du récipient collecteur (14) est activé.

8. Installation de traitement de restes de béton selon l'une quelconque des revendications 1 à 7, caractérisée en ce qu'on a adjoint, au conduit de raccordement (18), un dispositif de nettoyage à eau de rinçage (90) qui est rendu actif lors de la diminution d'une valeur réglée de la consommation de courant du moteur de commande (44) du dispositif de travail (16, 20).

9. Installation de traitement de restes de béton, dans laquelle le conduit de raccordement (18) est réalisé comme un conduit vibrant, monté à l'état oscillant et raccordé à un moteur à vibrations (68), caractérisée en ce que le conduit de raccordement (18) est relié au récipient collecteur (14) par l'intermédiaire d'un tronçon de conduit flexible (70).

10. Installation de traitement de restes de béton selon l'une quelconque des revendications 6 à 9, caractérisée en ce que l'eau de rinçage est amenée par intervalles pendant la phase de nettoyage.

FIG.1

FIG.2

0 167 646

9

FIG. 3

FIG. 4

0 167 646

FIG. 5

FIG.6

13

FIG.7

FIG.8

FIG.9

FIG.10